# FASCICULE DE BREVET EUROPEEN

(11) **EP 1 107 897 B1**
(45) Date de publication et mention de la délivrance du brevet: **12.05.2004**
(21) Numéro de dépôt: 99936755.0
(22) Date de dépôt: 19.08.1999
(51) Int. Cl.: B60T 8/42, B60T 13/74

(54) **DISPOSITIF DE FREINAGE A ASSISTANCE ET REGULATION COMBINEES**
BREMSVORRICHTUNG MIT KOMBINIERTER REGELUNG UND VERSTÄRKUNG
BRAKING DEVICE WITH COMBINED POWER-ASSISTANCE AND CONTROL

(30) Priorité: 28.08.1998 FR 9810798
(43) Date de publication de la demande: 20.06.2001
(73) Titulaire: Bosch Systemes de Freinage, 93700 Drancy (FR)
(72) Inventeur: BOISSEAU, Jean-Pierre, F-75014 Paris (FR)
(74) Mandataire: Hurwic, Aleksander Wiktor
(86) Numéro de dépôt international: PCT/FR1999/002011
(87) Numéro de publication internationale: WO 2000/012366

(56) Documents cités:
- DE-A- 3 342 555
- DE-A- 4 327 206
- DE-A- 4 426 682
- DE-A- 19 533 174

## Description

La présente invention concerne un dispositif de freinage pour véhicule à moteur, du type de ceux qui permettent d'éviter le blocage des roues de ce véhicule.

Plus précisément, la présente invention concerne un dispositif de freinage pour véhicule, du type de ceux qui comportent un circuit hydraulique fermé, rempli d'un fluide hydraulique sélectivement soumis à différentes pressions en différents points du circuit, ce circuit comprenant : un réservoir à basse pression; un premier récepteur de pression associé à une roue arrière du véhicule et dont une entrée constitue un premier point du circuit; un second récepteur de pression associé à une roue avant du véhicule et dont une entrée constitue un second point du circuit; un premier générateur de pression commandé mécaniquement et dont une sortie constitue un troisième point du circuit; un second générateur de pression commandé électriquement et dont une sortie constitue un quatrième point du circuit; un accumulateur de fluide hydraulique; un capteur de pression propre à fournir une mesure de la pression du fluide au troisième point du circuit; et des moyens de valve, les second et quatrième points (222, 324) du circuit étant reliés l'un à l'autre pour être en permanence soumis à la même pression, les moyens de valve (61, 62, 63) comprenant une première électrovalve (61) commandée pour évoluer d'un état passant dans lequel elle relie l'un à l'autre les second et troisième points (222, 313) du circuit, vers un état bloquant dans lequel elle isole l'un de l'autre les second et troisième points (222, 313) du circuit en réponse à un franchissement, par la mesure (Mp) de pression, d'un seuil (Sp) prédéterminé, la pression délivrée par le second générateur de pression (32) étant modulable électriquement.

Des dispositifs de ce type sont bien connus dans l'art antérieur et utilisés depuis de nombreuses années, en particulier du document DE A 195 33174.

Un des problèmes rencontrés dans la conception de tels systèmes de freinage réside dans la difficulté d'en améliorer sans cesse les performances tout en en réduisant le coût, en particulier pour en permettre la plus large diffusion possible et assurer ainsi une sécurité optimale du plus grand nombre possible de véhicules.

La présente invention se situe dans ce contexte et vise notamment à permettre une réduction sensible du coût de fabrication des dispositifs de ce type par optimisation de leurs fonctions.

A cette fin, le dispositif de l'invention, par ailleurs conforme à la définition qu'en donne le préambule ci-dessus, est essentiellement caractérisé en ce que, l'accumulateur est doté d'une entrée directement reliée au troisième point du circuit, et cet accumulateur est pré-réglé pour n'admettre du fluide hydraulique que lorsque la pression de fluide au troisième point du circuit est au moins égale aux trois quarts dudit seuil prédéterminé et en ce qu'une première loi d'absorption lie chaque variation de volume de fluide admis dans l'accumulateur à une variation correspondante de la pression du fluide au troisième point du circuit, dans lequel une seconde loi d'absorption lie chaque variation de volume de fluide admis dans le second récepteur de pression à une variation correspondante de la pression de fluide au quatrième point du circuit, et dans lequel les première et seconde lois d'absorption présentent des première et seconde pentes respectives, ces première et seconde pentes présentent avantageusement un rapport compris entre 0.75 et 1.33.

Pour optimiser encore le dispositif de freinage de l'invention, il est préférable de prévoir que les moyens de valve comprennent en outre une seconde électrovalve reliant sélectivement les premier et troisième points du circuit, et une troisième électrovalve reliant sélectivement le premier point du circuit au réservoir basse pression, les seconde et troisième électrovalves permettant une modulation sélective de la pression dans le premier récepteur de pression.

De façon classique, le premier générateur de pression peut comprendre un maître-cylindre, associé ou non à un servomoteur d'assistance à dépression.

Le second générateur de pression peut quant à lui comprendre un piston monté coulissant de façon étanche dans un cylindre et sélectivement mû par un moteur électrique.

Grâce à ces caractéristiques, le dispositif de l'invention peut combiner les avantages d'une assistance variable sur chaque roue avant du véhicule avec les avantages d'une régulation anti-blocage sur chaque roue arrière, sans avoir à recourir à l'utilisation d'une pompe.

Il est ainsi possible, notamment :
- de répondre aux conditions de freinage d'urgence avec une assistance variable sur chaque roue avant;
- de conserver et/ou d'améliorer les temps de réponse du dispositif de freinage grâce à la liaison directe entre le maître-cylindre et chaque récepteur de pression dans la phase initiale d'une séquence de freinage;
- de conserver la sensation pédale habituelle, la course morte habituelle, et le seuil de déclenchement habituel d'un dispositif de freinage standard, en équipant le dispositif de l'invention d'un servomoteur d'assistance à dépression de taille réduite;
- de maîtriser les coûts de fabrication par une simplification de la fonction anti-blocage de roues sur l'essieu arrière du véhicule;
- et d'obtenir une sécurité accrue par l'usage de deux énergies, à savoir des énergies musculaire et électrique, et par duplication des générateurs de pression commandant les récepteurs de pression avant.

D'autres caractéristiques et avantages de l'invention ressortiront clairement de la description qui en est faite ci-après, à titre indicatif et nullement limitatif, en référence aux dessins annexés, dans lesquels :
- La Figure 1 est le schéma d'un dispositif de freinage conforme à l'invention;
- La Figure 2 est un diagramme représentant les lois d'absorption de l'accumulateur et du récepteur de pression de la roue avant;
- La Figure 3 est un diagramme représentant, en fonction de la force de freinage exercée par le conducteur du véhicule, l'évolution des pressions de fluide hydraulique dans les récepteurs avant et arrière, pour un dispositif de freinage conforme à l'invention, doté d'un servomoteur à dépression d'assistance au freinage;
- La Figure 4 est un diagramme représentant, en fonction de la force de freinage exercée par le conducteur du véhicule, l'évolution des pressions de fluide hydraulique dans les récepteurs avant et arrière, pour un dispositif de freinage conforme à l'invention, non équipé de servomoteur à dépression d'assistance au freinage; et
- La Figure 5 illustre un mode de réalisation possible du second générateur de pression.

L'invention concerne un dispositif de freinage pour véhicule à moteur permettant d'éviter le blocage des roues de ce véhicule.

Plus précisément, l'invention concerne un dispositif de freinage pour véhicule, du type de ceux qui comportent un circuit hydraulique fermé, rempli d'un fluide hydraulique sélectivement soumis à différentes pressions en différents points du circuit.

Un tel circuit comprend classiquement : un réservoir 1 à basse pression; des récepteurs de pression tels que 21, 22, respectivement associés aux roues arrière et avant du véhicule, et dont chacun est propre à appliquer sur la roue correspondante un couple de freinage dépendant de la pression qu'il reçoit; un générateur de pression 31 commandé mécaniquement par le travail musculaire du conducteur du véhicule; un générateur de pression 32 commandé électriquement; un capteur de pression 5 fournissant un signal de mesure de pression Mp; et des électrovalves telles que 61, 62, et 63.

Des capteurs de roues (non représentés) fournissent à une unité logique 7 des signaux R1, R2, R3, et R4 dont chacun est représentatif du mouvement de rotation d'une roue correspondante du véhicule, l'unité logique recevant également le signal de mesure de pression Mp et délivrant des signaux de commande S32, S61, S62, et S63 à destination du générateur de pression 32 et des électrovalves 61, 62, et 63.

Le lecteur non familiarisé avec la technique concernée pourra avantageusement se reporter au cahier technique du déposant, intitulé "Dispositifs de freinage pour voitures" et édité aux Editions Delta Press, 35, Rue Sainte-Cécile, 13005 - Marseille, France.

Un premier point du circuit hydraulique de freinage est constitué par une entrée 211 du premier récepteur de pression 21; un second point de ce circuit est constitué par une entrée 222 du second récepteur de pression 22; un troisième point est constitué par une sortie 313 du générateur de pression 31 à commande mécanique; et un quatrième point de ce même circuit est constitué par une sortie 324 du générateur de pression 32 à commande électrique.

Le capteur de pression 5 est directement installé au troisième point 313 du circuit pour pouvoir fournir, en tant que signal Mp, une mesure représentative de la pression de fluide en ce troisième point 313.

Selon un premier aspect de l'invention, les second et quatrième points 222, 324 du circuit sont directement reliés l'un à l'autre pour être en permanence soumis à la même pression.

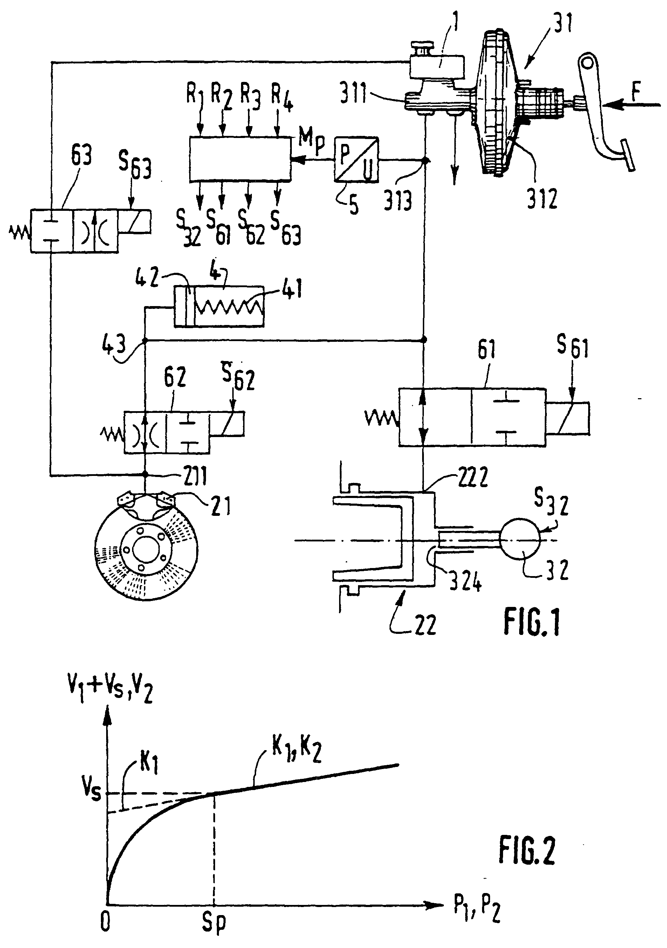

Au repos, c'est-à-dire en l'absence d'actionnement du dispositif de freinage, l'électrovalve 61, qui est installée entre les second et troisième points 222, 313 du circuit, se trouve dans un état passant tel qu'illustré à la figure 1 et dans lequel elle fait communiquer entre eux ces second et troisième points 222, 313 du circuit.

Lorsque la mesure de pression Mp franchit un seuil prédéterminé Sp, ce franchissement est détecté par l'unité logique 7 qui commande aussitôt le passage de l'électrovalve 61 dans un état bloquant, dans lequel cette électrovalve isole l'un de l'autre les second et troisième points 222, 313 du circuit.

Le second générateur de pression 32 est par ailleurs du type de ceux qui délivrent une pression modulable électriquement.

Dans ces conditions, il est possible, dès que le conducteur a appliqué une pression égale au seuil Sp, d'utiliser l'énergie électrique pour intensifier l'effort de freinage sans requérir, de la part du conducteur, un effort musculaire supplémentaire qu'il peut éventuellement ne pas être capable de fournir.

Selon un second aspect de l'invention, l'accumulateur 4 est doté d'une entrée 43 directement reliée au troisième point 313 du circuit, et cet accumulateur 4 est pré-réglé pour n'admettre du fluide hydraulique que lorsque la pression de fluide au troisième point 313 du circuit est au moins égale aux trois quarts du seuil prédéterminé Sp, et, plus avantageusement encore, lorsqu'elle est égale à ce seuil Sp.

A cette fin, l'accumulateur 4 peut comporter un ressort 41 qui repousse un piston 42 et qui se trouve comprimé lorsque le piston est déplacé par le fluide entrant dans l'accumulateur, le ressort 41 étant précontraint pour n'autoriser l'admission de fluide qu'au delà de la pression souhaitée.

Grâce à cet arrangement, il est non seulement possible d'utiliser l'accumulateur pour simuler l'actionnement du second récepteur de pression 22, comme si l'électrovalve 61 était restée dans l'état passant, mais aussi de stocker dans l'accumulateur 4 un certain volume de fluide sous pression utilisable pour opérer une régulation anti-blocage sans pompe du premier récepteur de pression 21.

Pour ce faire, il convient de faire coïncider au moins approximativement, pour des valeurs de pression supérieures au seuil Sp, la première loi d'absorption définie comme étant celle qui lie chaque variation de volume V1 de fluide admis dans l'accumulateur 4 à une variation correspondante de la pression P1 du fluide au troisième point 313 du circuit, avec la seconde loi d'absorption définie comme étant celle qui lie chaque variation de volume V2 de fluide admis dans le second récepteur 22 de pression à une variation correspondante de la pression P2 de fluide au quatrième point 324 du circuit.

En réalité, comme le montre la figure 2, la seconde loi d'absorption présente d'abord une évolution non linéaire qui correspond au rattrapage des jeux, et qui est suivie d'une évolution linéaire définie par une pente K2, correspondant à la déformation élastique du frein actionné par le récepteur de pression 22.

La première loi d'absorption est une loi linéaire de pente K1, où K1 est la raideur du ressort 41, dont l'origine en pression P1 se situe à la valeur du seuil Sp, dont l'origine, mesurée en volume V2, est notée Vs, et dont l'origine, mesurée en volume V1, est nulle, puisque le volume de fluide V1 admis dans l'accumulateur ne commence à croître que pour les valeurs de la pression supérieures au seuil Sp.

Dans ces conditions, le remplissage de l'accumulateur 4 peut fournir une simulation optimale de l'actionnement du récepteur de pression 22 sous réserve que le seuil Sp soit choisi sur la partie linéaire de la seconde loi d'absorption et sous réserve de donner à la raideur K1 du ressort 41 la valeur de la pente K2 de cette seconde loi d'absorption, cette simulation restant acceptable aussi longtemps que le rapport K1/K2 reste compris entre 0.75 et 1.33.

Comme l'accumulateur 4 constitue une réserve de fluide sous pression disponible pour le premier récepteur de pression 21, il est possible de moduler la pression régnant dans ce premier récepteur de pression sans avoir à recourir à l'utilisation d'une pompe.

A cette fin, il suffit, comme le montre la figure 1, de prévoir une seconde électrovalve 62 installée entre les premier et troisième points 211, 313 du circuit, et une troisième électrovalve 63 installée entre le premier point 211 du circuit et le réservoir 1 basse pression, ces seconde et troisième électrovalves 62, 63 étant commandées par l'unité logique 7 pour permettre une modulation sélective de la pression dans le premier récepteur 21 de pression, en particulier pour éviter un blocage de la roue arrière correspondante.

Comme le montre la figure 1, le premier générateur de pression 31 peut comprendre un maître-cylindre 311, équipé ou non d'un servomoteur d'assistance à dépression 312.

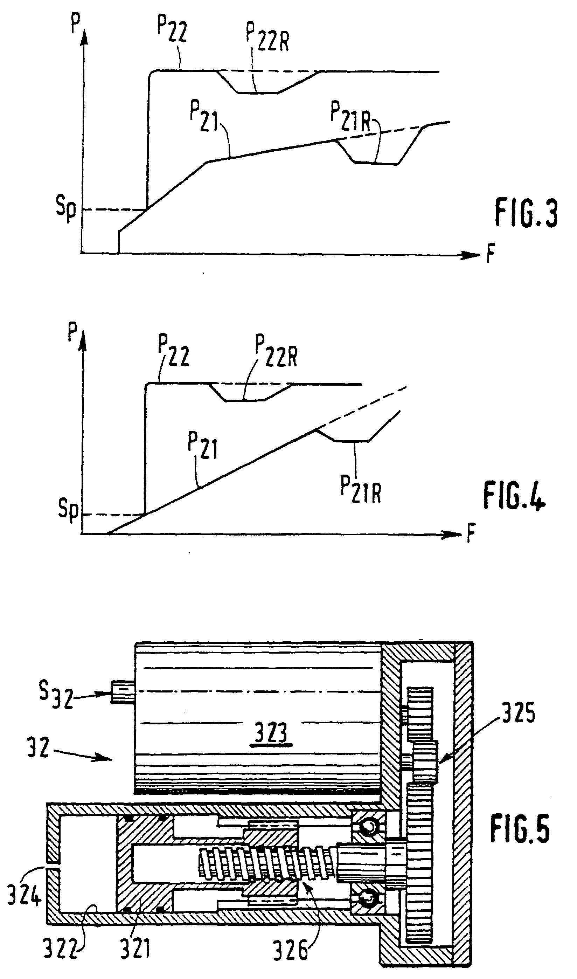

La Figure 3 est un diagramme représentant, en fonction de la force de freinage F exercée par le conducteur du véhicule, l'évolution des pressions P22 et P21 dans les récepteurs avant 22 et arrière 21, dans le cas de l'utilisation d'un servomoteur à dépression 312.

La pression P21 dans le récepteur de pression arrière 21 évolue en fonction de la force F suivant la courbe de réponse caractéristique du servomoteur, sauf si par exemple cette pression doit être régulée par la commutation des électrovalves 62 et 63 afin d'éviter momentanément un blocage de la roue arrière correspondante, cette situation étant illustrée par l'évolution de pression P21R.
La pression P22 dans le récepteur de pression avant 22 étant, jusqu'à sa valeur seuil Sp, engendrée par le générateur de pression à commande mécanique 31, elle suit, en l'absence de toute régulation, la même évolution que la pression P21.

En revanche, dans la mesure où, au-delà du seuil Sp, la pression P22 est engendrée par le générateur de pression à commande électrique 32, cette pression P22 peut à la fois dépasser sensiblement la pression que l'effort du conducteur fait apparaître au troisième point 313 du circuit, et évoluer indépendamment de la pression disponible au troisième point 313, la pression P22 pouvant elle-même être modulée par commande électrique du générateur de pression 32, par exemple pour éviter momentanément un blocage de la roue avant correspondante, comme le montre l'évolution P22R de cette pression.

Dans le cas où aucun servomoteur n'est utilisé (figure 4), la situation est semblable, à ceci près que la pression P21 évolue suivant la courbe de réponse caractéristique d'un maître-cylindre dépourvu de toute assistance.

Comme le montre la figure 5, le générateur de pression à commande électrique 32 comprend avantageusement un piston 321 monté coulissant de façon étanche dans un cylindre 322 et sélectivement mû par un moteur électrique 323, par exemple par l'intermédiaire d'un réducteur à train d'engrenages 325 et d'une liaison vis-écrou 326, un générateur de pression piézo-électrique pouvant cependant être utilisé à la place du générateur illustré..

## Revendications

1. Dispositif de freinage pour véhicule, du type de ceux qui comportent un circuit hydraulique fermé, rempli d'un fluide hydraulique sélectivement soumis à différentes pressions en différents points du circuit, ce circuit comprenant : un réservoir (1) à basse pression; un premier récepteur de pression (21) associé à une roue arrière du véhicule et dont une entrée (211) constitue un premier point du circuit; un second récepteur de pression (22) associé à une roue avant du véhicule et dont une entrée (222) constitue un second point du circuit; un premier générateur de pression (31) commandé mécaniquement et dont une sortie (313) constitue un troisième point du circuit; un second générateur de pression (32) commandé électriquement et dont une sortie (324) constitue un quatrième point du circuit; un accumulateur (4) de fluide hydraulique; un capteur de pression (5) propre à fournir une mesure (Mp) de la pression du fluide au troisième point (313) du circuit; et des moyens de valve (61, 62, 63), les second et quatrième points (222, 324) du circuit étant reliés l'un à l'autre pour être en permanence soumis à la même pression, les moyens de valve (61, 62, 63) comprenant une première électrovalve (61) commandée pour évoluer d'un état passant dans lequel elle relie l'un à l'autre les second et troisième points (222, 313) du circuit, vers un état bloquant dans lequel elle isole l'un de l'autre les second et troisième points (222, 313) du circuit, en réponse à un franchissement, par la mesure (Mp) de pression, d'un seuil (Sp) prédéterminé, la pression délivrée par le second générateur de pression (32) étant modulable électriquement **caractérisé en ce que** l'accumulateur (4) est doté d'une entrée (43) directement reliée au troisième point (313) du circuit, et **en ce que** cet accumulateur (4) est pré-réglé pour n'admettre du fluide hydraulique que lorsque la pression de fluide au troisième point (313) du circuit est au moins égale aux trois quarts dudit seuil prédéterminé (Sp) et **en ce qu'**une première loi d'absorption lie chaque variation de volume (V1) de fluide admis dans l'accumulateur (4) à une variation correspondante de la pression (P1) du fluide au troisième point (313) du circuit, **en ce qu'**une seconde loi d'absorption lie chaque variation de volume (V2) de fluide admis dans le second récepteur (22) de pression à une variation correspondante de la pression (P2) de fluide au quatrième point (324) du circuit, **en ce que** les première et seconde lois d'absorption présentent des première et seconde pentes respectives (K1, K2), et **en ce que** les première et seconde pentes présentent un rapport (K1/K2) compris entre 0.75 et 1.33.

2. Dispositif de freinage suivant la revendication 1 **caractérisé en ce que** les moyens de valve (61, 62, 63) comprennent en outre une seconde électrovalve (62) reliant sélectivement les premier et troisième points (211, 313) du circuit, et une troisième électrovalve (63) reliant sélectivement le premier point (211) du circuit au réservoir (1) basse pression, les seconde et troisième électrovalves (62, 63) permettant une modulation sélective de la pression dans le premier récepteur (21) de pression.

3. Dispositif de freinage suivant la revendication 1 ou 2, **caractérisé en ce que** le premier générateur de pression (31) comprend un maître-cylindre (311).

4. Dispositif de freinage suivant la revendication 3, **caractérisé en ce que** le premier générateur de pression (31) comprend un servomoteur d'assistance à dépression (312).

5. Dispositif de freinage suivant l'une quelconque des revendications précédentes, **caractérisé en ce que** le second générateur de pression (32) comprend un piston (321) monté coulissant de façon étanche dans un cylindre (322) et sélectivement mû par un moteur électrique (323).

## Claims

1. Vehicle braking device of the type comprising a closed hydraulic circuit filled with a hydraulic fluid selectively subjected to various pressures at various points in the circuit, this circuit comprising: a low-pressure reservoir (1); a first pressure receiver (21) associated with one rear wheel of the vehicle and one inlet (211) of which constitutes a first point of the circuit; a second pressure receiver (22) associated with one front wheel of the vehicle and one inlet (222) of which constitutes a second point of the circuit; a first pressure generator (31) controlled mechanically and one outlet (313) of which constitutes a third point of the circuit; a second pressure generator (32) controlled electrically and one outlet (324) of which constitutes a fourth point of the circuit; a hydraulic-fluid accumulator (4); a pressure sensor (5) capable of providing a measurement (Mp) of the pressure of the fluid at the third point (313) of the circuit; and valve means (61, 62, 63), the second and fourth points (222, 324) of the circuit being connected to each other so as to be permanently subjected to the same pressure, the valve means (61, 62, 63) comprising a first solenoid valve (61) operated to move from an open state in which it connects the second and third points (222, 313) of the circuit to each other, into a closed state in which it isolates the second and third points (222, 313) of the circuit from each other in response to the pressure measurement (Mp) crossing a predetermined threshold (Sp), the pressure delivered by the second pressure generator (32) being electrically modulated, **characterized in that** the accumulator (4) has an inlet (43) connected directly to the third point (313) of the circuit and **in that** this accumulator (4) is preset to allow hydraulic fluid in only when the fluid pressure at the third point (313) of the circuit is at least equal to three quarters of the said predetermined threshold value (Sp), **in that** a first absorption law connects each variation in volume (V1) of fluid let into the accumulator (4) with a corresponding variation in the pressure (P1) of the fluid at the third point (313) of the circuit, **in that** a second absorption law connects each variation in volume (V2) of fluid let into the second pressure receiver (22) with a corresponding variation in the fluid pressure (P2) at the fourth point (324) of the circuit, **in that** the first and second absorption laws have first and second respective gradients (K1, K2), and **in that** the first and second gradients are in a ratio (K1/K2) of between 0.75 and 1.33.

2. Braking device according to claim 1, **characterized in that** the valve means (61, 62, 63) further comprise a second solenoid valve (62) selectively connecting the first and third points (211, 313) of the circuit, and a third solenoid valve (63) selectively connecting the first point (211) of the circuit to the low-pressure reservoir (1), the second and third solenoid valves (62, 63) allowing the pressure in the first pressure receiver (21) to be altered selectively.

3. Braking device according to claim 1 or 2, **characterized in that** the first pressure generator (31) comprises a master cylinder (311).

4. Braking device according to Claim 3, **characterized in that** the first pressure generator (31) comprises a vacuum booster (312).

5. Braking device according to any one of the preceding claims, **characterized in that** the second pressure generator (32) comprises a piston (321) mounted so that it can slide in leaktight fashion in a cylinder (322) and be selectively moved by an electric motor (323).

## Patentansprüche

1. Bremsvorrichtung für ein Fahrzeug der Art von jenen, die einen geschlossenen Hydraulikkreis aufweisen, der mit einem Hydraulikfluid gefüllt ist, das selektiv verschiedenen Drücken an verschiedenen Punkten des Kreises ausgesetzt ist, wobei dieser Kreis aufweist: einen Behälter (1) auf niedrigem Druck; einen ersten Druckaufnehmer (21), der einem Hinterrad des Fahrzeugs zugeordnet ist und von welchem ein Eingang (211) einen ersten Punkt des Kreises bildet; einen zweiten Druckaufnehmer (22), der mit einem Vorderrad des Fahrzeugs verbunden ist und von welchem ein Eingang (222) einen zweiten Punkt des Kreises bildet; einen ersten Druckgenerator (31), der mechanisch gesteuert wird und von welchem ein Ausgang (313) einen dritten Punkt des Kreises bildet; einen zweiten Druckgenerator (32), der elektrisch gesteuert wird und von welchem ein Ausgang (324) einen vierten Punkt des Kreises bildet; einen Speicher (4) für Hydraulikfluid; einen Drucksensor (5), der ein Maß (Mp) für den Druck des Fluids am dritten Punkt (313) des Kreises liefern kann; und Ventilmittel (61, 62, 63), wobei der zweite und der vierte Punkt (222, 324) des Kreises miteinander verbunden sind, damit sie stets dem gleichen Druck ausgesetzt sind, wobei die Ventilmittel (61, 62, 63) ein erstes Elektroventil (61) aufweisen, das gesteuert wird, um sich von einem Durchlaßzustand, in dem es den zweiten und den dritten Punkt (222, 313) des Kreises miteinander verbindet, zu einem Sperrzustand, in dem es den zweiten und den dritten Punkt (222, 313) des Kreises voneinander isoliert, als Reaktion auf eine Überschreitung einer vorbestimmten Schwelle (Sp) durch das Maß (Mp) für den Druck zu bewegen, wobei der vom zweiten Druckgenerator (32) gelieferte Druck elektrisch modulierbar ist, **dadurch gekennzeichnet, daß** der Speicher (4) mit einem Eingang (43) versehen ist, der direkt mit dem dritten Punkt (313) des Kreises verbunden ist, und daß dieser Speicher (4) voreingestellt ist, um nur Hydraulikfluid einzulassen, wenn der Fluiddruck am dritten Punkt (313) des Kreises zumindest gleich drei Viertel der vorbestimmten Schwelle (Sp) ist, und daß ein erster Absorptionsverlauf jede Volumenänderung (V1) des in den Speicher (4) eingelassenen Fluids mit einer entsprechenden Veränderung des Drucks (P1) des Fluids am dritten Punkt (313) des Kreises verbindet, daß ein zweiter Absorptionsverlauf jede Volumenänderung (V2) des in den zweiten Druckaufnehmer (22) eingelassenen Fluids mit einer entsprechenden Veränderung des Drucks (P2) des Fluids am vierten Punkt (324) des Kreises verbindet, daß das erste und der zweite Absorptionsverlauf eine erste bzw. eine zweite Neigung (K1, K2) aufweisen und daß die erste und die zweite Neigung ein Verhältnis (K1/K2) darstellen, das zwischen 0,75 und 1,33 liegt.

2. Bremsvorrichtung nach Anspruch 1, **dadurch gekennzeichnet, daß** die Ventilmittel (61, 62, 63) außerdem ein zweites Elektroventil (62), das selektiv den ersten und den dritten Punkt (211, 313) des Kreises verbindet, und ein drittes Elektroventil (63), das selektiv den ersten Punkt (211) des Kreises mit dem Niederdruckbehälter (1) verbindet, aufweisen, wobei das zweite und das dritte Elektroventil (62, 63) eine selektive Modulation des Drucks im ersten Druckaufnehmer (21) ermöglichen.

3. Bremsvorrichtung nach Anspruch 1 oder 2, **dadurch gekennzeichnet, daß** der erste Druckgenerator (31) einen Hauptzylinder (311) aufweist.

4. Bremsvorrichtung nach Anspruch 3, **dadurch gekennzeichnet, daß** der erste Druckgenerator (31) einen Unterdruck-Unterstützungsservomotor (312) aufweist.

5. Bremsvorrichtung nach einem der vorangehenden Ansprüche, **dadurch gekennzeichnet, daß** der zweite Druckgenerator (32) einen Kolben (321) aufweist, der in dichter Weise gleitend in einem Zylinder (322) angebracht ist und selektiv durch einen Elektromotor (323) bewegt wird.
